# EUROPEAN PATENT APPLICATION

(11) **EP 3 518 132 A1**
(43) Date of publication of application: **31.07.2019**
(21) Application number: 18305076.4
(22) Date of filing: 26.01.2018
(51) Int. Cl.: G06F 21/44, H04L 29/06

(54) **METHOD AND APPARATUS FOR IMPROVING WEBSITE SECURITY**

(71) Applicant: Ecole Nationale de l'Aviation Civile, 31400 Toulouse Cedex (FR)
(72) Inventor: LARRIEU, Nicolas, 31400 TOULOUSE (FR); FOURMENT, Vincent, 33320 LE TAILLAN MEDOC (FR)
(74) Representative: Bell, Mark

(57) **Abstract**

A mechanism for authenticating a website is provided whereby an additional authentication value which is inherently and verifiably associated with the entity operating the website such as address, business registration number, owner name or the like. The additional authentication value is included in a signed field of a certificate provided to visitors of the website. The browser interfacing with the website can then compare the additional authentication value with the same information obtained from another source, such as a dedicated authentication server, or user input. If the information is found to match, the information can be deemed to be authenticated.

## Description

### Field of the invention

The present invention relates to the security of websites, and in particular websites associated with usage of a specific geographical location.

### Background of the invention

Over recent years, the world wide web has become a primary venue for many types of commercial transaction. This development has led to correspondingly increasing levels of fraud, identity theft, and other criminal or in any case undesirable practices based on a betrayal of trust. One of the factors that predisposes the world wide web to practices of this sort is the underlying anonymity of most websites - users typically interact with websites with little or no idea of the physical location of the business associated with the website, to the extent that it has a physical location, and still less the identity of the individuals behind that business. This fact can make it difficult for users to distinguish between the genuine website of a business and a counterfeit website purporting to be associated with that business but in fact operated by criminals. More insidiously, conventional HTTP communications cannot rule out "man in the middle" attacks, where communications between a website and the user are intercepted by a third party, who may then retain the communications, and/or emit new or replayed and/or amended communications, in place of the genuine original messages.

One partial technical solution to these issues is the certificate system used to maintain secure communications between a user's web browser and a genuine website. Current web browsers are generally configured by default with root certificates comprising the respective public keys of a number of certification authorities. When secure communications are initiated, for example under the HTTPS mechanism, the website exposes a certificate issued by one of those certification authorities for inspection by the user's browser. This certificate associates the domain name of the website with a specific public key, and is signed by one of the certification authorities. During its inspection by the browser, the browser can determine the authenticity of the website certificate, using the public key of the corresponding authentication authority. Where the website certificate is determined to be authentic, assuming the website specified in the website certificate matches the website to be accessed, the public key presented in the website certificate can be trusted to be the public key associated with the website. The user's browser may then generate a symmetric key for the encryption in both directions of information during the remainder of the transaction. This symmetric key can be encoded and transmitted to the website, encrypted using the website's private key in the knowledge that the website will be able to decrypt it, using the website's private key. Thenceforth, both the website and the web browser can securely exchange encrypted information, using the symmetric key.
This approach helps prevent man in the middle type attacks, providing a secure pipe between the entities, but does little to address concerns as to the relationship between the website and real world entities. It is thus desired to further address these issues.

### Summary of the invention

In accordance with the present disclosure in a first aspect there is provided an authenticator adapted to authenticate a website, the authenticator comprising an input interface adapted to receive a first identifier of a website, a web interface adapted to retrieve a certificate from a website server on the basis of the first identifier, wherein the certificate incorporates a signed field comprising a first authentication value, wherein the authenticator is further adapted to associate a second identifier of the website with a second authentication value, and further comprises a comparator adapted to compare the first authentication value with the second authentication value, and in a case where the first authentication value satisfies a predetermined test relationship with the second authentication value, outputting an indication that the website is deemed authentic.
In a development of the first aspect, the apparatus further comprises a Global Navigation Satellite System interface wherein the output of the Global Navigation Satellite System is provided as the basis of the second authentication value.

In accordance with the present invention in a second aspect there is provided method of determining the authenticity of a website, the method comprising the steps of:
- receiving a first identifier of the website,
- receiving a certificate from the website, wherein the certificate incorporates a signed field comprising a first authentication value,
- associating a second identifier of the website with a second authentication value,
- comparing the first authentication value with the second authentication value, and
- in a case where the first authentication value satisfies a predetermined test relationship with the second authentication value, considering the website to be authentic.
In a development of the second aspect, the first identifier is the website domain name, the method comprising the additional step stripping a URL belonging to the site to obtain the first identifier.
In a further development of the second aspect the website is associated with a first physical location, the first authentication value and the second authentication value are geographic positions, and the first authentication value is the geographical position of the physical location, and wherein the predetermined test relationship comprises a determination whether the second authentication value lies within a predetermined distance of the first authentication value.
In a further development of the second aspect the first authentication value and the second authentication value are defined in terms of a geographic coordinate system. In a further development of the second aspect the first site identifier is a website IP address, the method comprising an additional step of resolving a URL to obtain the first site identifier, and wherein the certificate further comprises a field containing the website IP address.
In a further development of the second aspect the site is associated with the second authentication value by submitting the second site identifier and the first authentication value to an authentication module, the authentication module being adapted to compare the first site identifier to the second site identifier, and in a case where the first site identifier is identical to the second site identifier, proceeding to retrieve the second authentication value associated with the first site identifier.
In a further development of the second aspect the step of retrieving the second authentication value comprises submitting the IP address to an authentication server comprising a directory of site identifiers to authentication value mappings, and receiving from the authentication server the second authentication value corresponding to the second site identifier.
In a further development of the second aspect, the method comprises the further step after receiving the certificate of retrieving the public key of the certifying authority of said certificate, including the signed field, and authenticating the certificate and the signed field therewith.
In a further development of the second aspect the second authentication value is provided via a user input.
In accordance with the present invention in a third aspect there is provided a computer program comprising instructions adapted to implement the second aspect.
In accordance with the present invention in a fourth aspect there is provided a website certificate for determining the authenticity of a website, the certificate comprising a first identifier of the website, and a signed field comprising a first authentication value, wherein the first authentication value constitutes a publically verifiable characteristic of the website.

### Brief Description of the Drawings

The above and other advantages of the present invention will now be described with reference to the accompanying drawings, provided for illustration purposes only, in which:
Figure 1 shows a system of communicating entities illustrating certain embodiments;
Figure 2 shows a method of determining the authenticity of a website;
Figure 3 shows a system of communicating entities illustrating certain further embodiments;
Figure 4 shows an apparatus adapted to implement embodiments of the invention;
Figure 5 shows a generic computing system suitable for implementation of embodiments of the invention; and
Figure 6 shows a smartphone device adaptable to constitute an embodiment.

### Detailed description

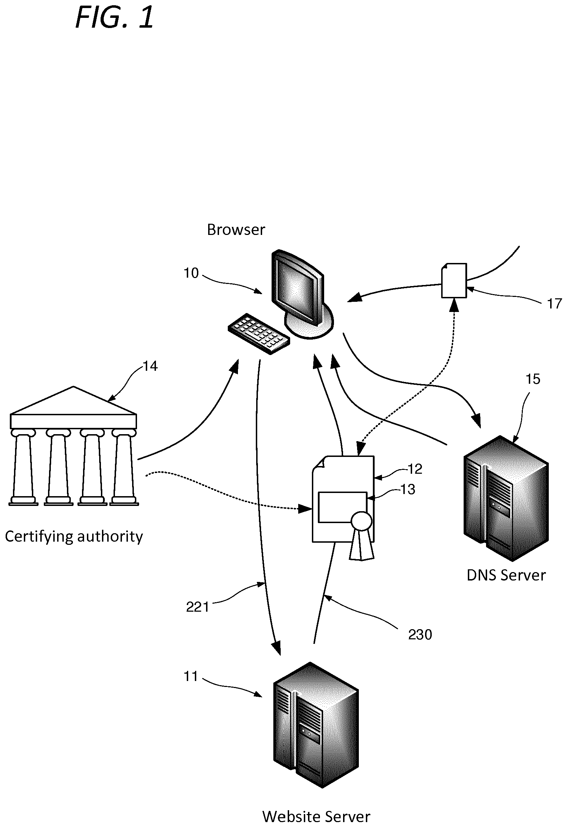

Figure 1 shows a system of communicating entities illustrating certain embodiments. As shown in figure 1, there is provided a web browser 10 running on a user computing device, and a website hosted by a website server 11.
The system of figure 1 may be adapted to implement a method in accordance with certain embodiments.

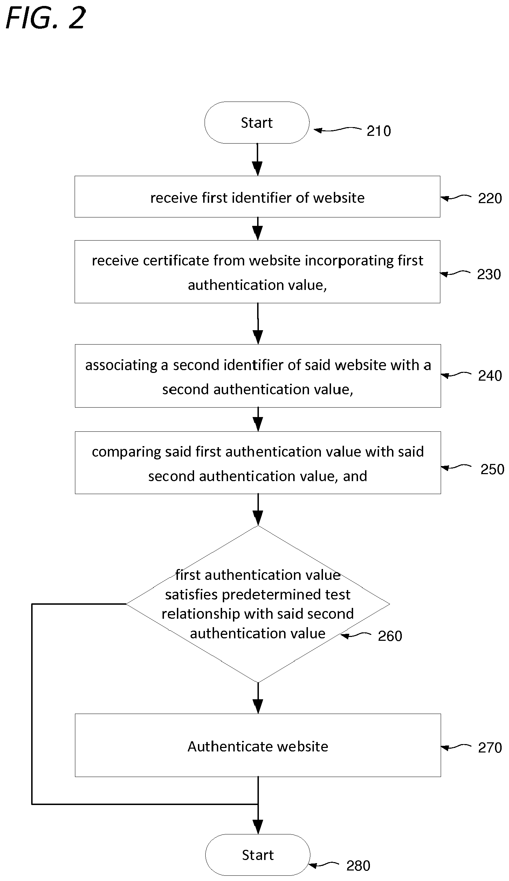

Figure 2 shows a method in accordance with certain embodiments. The method of figure 2 is an example of an embodiment which may be implemented in a system described with reference to figure 1, or otherwise.
Figure 2 shows a method of determining the authenticity of a website such as the website hosted by website server 11 as mentioned above.
As shown in figure 2, the method begins at step 210 before proceeding to step 220 at which a first identifier of the website is received.
Typically a user wishing to consult the website hosted on the website server 11 will enter a Uniform Resource Locator (URL) string specifying the specific page of the site that he wishes to view into the browser 10. This can be done directly by typing the URL or by selecting a link in a web page or email or the like. The URL comprises the name of the domain to which the page belongs. The browser will interrogate DNS server 15 to obtain the IP address of the server hosting the requested domain name, and when the DNS server returns the IP address, the browser may then connect to the server to retrieve the desired website. The first identifier of the website as required by step 210 of the method of figure 2 may be the URL, the IP address or the Domain name of the website for example.

Accordingly, in embodiments where the first site identifier is a website domain name, the method may comprise the additional step of stripping a URL belonging to the site to obtain the first identifier.
For example, where a URL follows the standard format scheme: [//[user[:password]@]host[:port]][/path][?query][#fragment]
the host section might be extracted as the first identifier. In some contexts, other components of the URL, such as some or all of the path may also be included as part of the first identifier.

Alternatively, in embodiments where the first site identifier is a website IP address, the method may comprise an additional step of resolving a URL to obtain the IP address, and the certificate 12 further comprises a field 13 containing the website IP address.
Once the first site identifier is available, the method next proceeds to receive a certificate 12 from the website, wherein the certificate incorporates a signed field comprising a first authentication value 13.
The certificate system is used to maintain secure communications between a user's web browser 10 and a genuine website. Modern web browsers are generally configured by default with the root certificates comprising the respective public keys of a number of certification authorities such as authentication authority 14. When secure communications are initiated, for example under the HTTPS mechanism, the website exposes the certificate 12 which may have been issued by one of those certification authorities for inspection by the user's browser. This certificate associates the domain name of the website with a specific public key, and is signed by one of the certification authorities. When inspected by the browser, the browser can determine the authenticity of the website certificate using the public key of the corresponding authentication authority. Where the website certificate is determined to be authentic, assuming the website specified in the website certificate matches the website to be accessed, the public key presented in the website certificate can be trusted to be the public key associated with the website. It will be appreciated that this approach may be applied together with other security measures, including conventional checks such as verifying that the certificate has not expired, and the like. The user's browser may then generate a symmetric key for the encryption in both directions of information exchanged during the remainder of the transaction or the active session. This symmetric key can be encoded and transmitted to the website, encrypted using the website's private key, in the knowledge that the website will be able to decrypt it using the website's private key. Thenceforth, both the website and the web browser encrypt information using the same symmetric key.

In accordance with the method of figure 2, the certificate comprises a signed field comprising a first authentication value 13. In some cases, this authentication value 13 may constitute information that may be included in a certificate 12 structured in accordance with the conventional x509 certificate format standard. In other embodiments, a variant of the standard may be defined providing extended support for embodiments of the present invention. The nature of the authentication value 13 and the corresponding provisions in the certificate structure are explored in more detail below.
The submission of a page request from the web browser 10 to the website server 11, and the resulting return of the certificate 12 are represented in figure 1 by the arrows 221 and 230 respectively.
The method next proceeds to step 240 at which a second identifier of the website is associated with a second authentication value.
In certain embodiments, the second site identifier may be identical to the first site identifier. Alternatively, an alternative site identifier may be used. For example, if the site IP address is used as the first site identifier, the second site identifier might be the domain name or URL. If the site URL address is used as the first site identifier, the second site identifier might be the domain name or IP address, and so on.
In certain embodiments, the website may be associated with the second authentication value 17 by submitting the second site identifier and the first authentication value to an authentication module being a secure component of the web browser, a plug-in, or other application running on the user device running the web browser 10. In such embodiments, the authentication module is adapted to compare the first site identifier to the second site identifier, and in a case where the first site identifier is identical to the second site identifier, proceeding to retrieve the second authentication value associated with the first site identifier.
In other embodiments the second authentication value 17 may be provided by a user, for example by means of keyboard input.
In other embodiments the second authentication value 17 may be provided by a user, for example by means of scanning a barcode, QR Code or the like or other machine readable code.
In other embodiments, the step of retrieving the second authentication value 17 may comprise submitting the IP address to an authentication server comprising a directory of site identifiers to authentication value mappings, and receiving from the authentication server the second authentication value corresponding to the second site identifier.
Once the second authentication value 17 has been determined, the method next proceeds at step 250 to compare the first authentication value 13 with the second authentication value 17, and at step 260 to determine whether the first authentication value 13 satisfies a predetermined test relationship with the second authentication value 17.
This predetermined relationship may be one of identity, such that the first authentication value 13 must be identical to the second authentication value 17, or may specify that the first authentication value 13 must lie within a specified range of the second authentication value 17, or otherwise.
In a case where the first authentication value 13 satisfies the predetermined test relationship with the second authentication value 17, the method proceeds to step 270 at which the website is determined to be authentic.
In either case the method then terminates at step 280.

In certain embodiments, the first authentication value and second authentication value may represent publicly known and verifiable characteristics of the website. For example, if the website is associated with a physically location, for example a bricks- and-mortar shop, the registered address of a business, a public institution, or the like, the position of this location may provide the first authentication value and second authentication value. Other suitable values might be the tax or registered business serial number of the organization, the name of an owner, and the like.
On this basis, at step 240 as described above at which the second website identifier is associated with a second authentication value, the publically verifiable nature of the information provides additional security and assurance to the user. In a case where the second authentication value 17 may be provided by a user, for example by means of keyboard input, this may involve the user typing in the registered address of a business, the registered business serial number of the organization, the name of an owner, and/or the like. In the case where the second authentication value 17 is provided by a user, for example by means of scanning a barcode or other machine readable code, this may be a code or an image printed on a receipt, business card, product packaging, article itself, user guide, or other tangible object provided by the business.

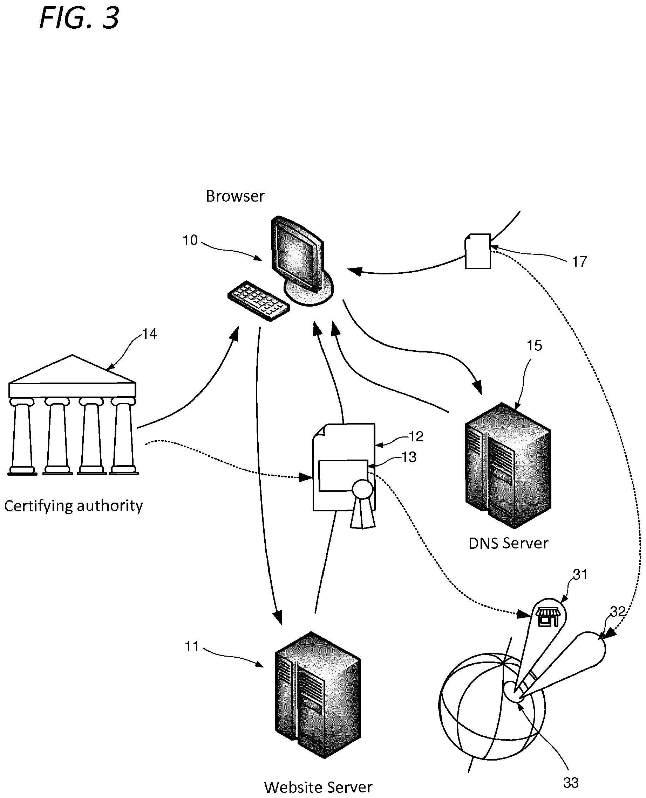

Figure 3 shows a system of communicating entities illustrating certain further embodiments.
Figure 3 corresponds generally to the system of figure 1. In accordance with certain embodiments, the first authentication value is defined as the geographical location of a business operating the website. By way of example, the business might be a pharmacy, or other business whose establishment and operation is subject to substantial regulation, and whose internet operations call for an augmented level of trust.
The geographical location of the business may be encoded in terms of a suitable projected coordinate system such as one based on the Universal Transverse Mercator system, or a geographic coordinate system. Where this approach is adopted, the first authentication value 13 may be stored in a free text field of the certificate 12, so that a conventional x509 format certificate may be used. Alternatively, an augmented certificate standard may be defined comprising a field defined for the purposes of the present invention. In any case, the first authentication value is signed in the same way as the other secure parts of the certificate, in the same manner as for conventional x509 certificates.
Alternatively, the geographical location of the business may be encoded in terms of a street address. Where this approach is adopted, the first authentication value 13 may be stored for example in the "locality" tag of the "subject" field for the website owner of the certificate 12, so that a conventional x509 format certificate may be used.
Alternatively, in regions where a post code system provides sufficient granularity, the geographical location of the business may be encoded in terms a post code. Where this approach is adopted, the first authentication value 13 may be stored for example in the "locality" tag of the "subject" field for the website owner of the certificate 12, so that a conventional x509 format certificate may be used.
The first authentication value and second authentication value need not be defined in the same terms- i.e. different coordinate systems may be used, or a combination of different encoding mechanisms may be used for the first authentication mechanism on the one hand and the second authentication mechanism on the other. For example the first authentication value may be defined as a street address or postcode, while the second authentication value may be defined as a coordinate value, or vice versa. Where this is the case, the step 250 of comparing the first and second authentication values may comprise an additional step of converting the format of one authentication value to that of the other.
As shown in figure 3, the first authentication value 13 specifies a first geographical position 31, corresponding for example to the location of the business as discussed above, and the second authentication value specifies a second geographical position 32, as provided by any of the means discussed above or otherwise. At the step 260 as discussed above of determining whether the first authentication value satisfies a predetermined test relationship with the second authentication value, there is defined a perimeter 33 with respect to the first authentication value. If the second authentication value falls within this perimeter, the test relationship is deemed to be satisfied, and the website authenticated.
On this basis, at step 240 as described above at which the second website identifier is associated with a second authentication value, as well as any of the mechanisms described above for entering the second authentication value, additional mechanisms may involve selecting the location of the physical location on a map presented for example in the web browser, or receiving data from a GPS device. This latter approach is relevant where the user wishes to ensure that the website he is visiting corresponds to that of his present location.
Thus, according to certain embodiments, the website is associated with a first physical location, the first authentication value and the second authentication value are geographic positions, and the first authentication value is the geographical position of the physical location, and wherein the predetermined test relationship comprises a determination whether the second authentication value lies within a predetermined distance of the first authentication value.
On this basis, by confirming that the website complies with a verifiable test condition, the user can be assured of the validity of the site. A fraudulent third party website cannot successfully present itself as the website of the bona fide business, since the certifying authority will not sign a certificate whose content does not match the verifiable information such as business location, registration number and the like. Fake certificates cannot be used since they will either not be recognized by the web browser, or they will fail authentication with respect to the certifying authorities public key.

As discussed above, certain embodiments are compatible with public certificate mechanisms such as HTTPS. In such embodiments, the additional advantages of these mechanisms may be extended to embodiments of the present invention by the further step after receiving the certificate of retrieving the public key of the certifying authority 14 of the certificate 12, issuer of the certificate including the signed field incorporating the first authentication value, and authenticating the certificate and the signed field 13 therewith.

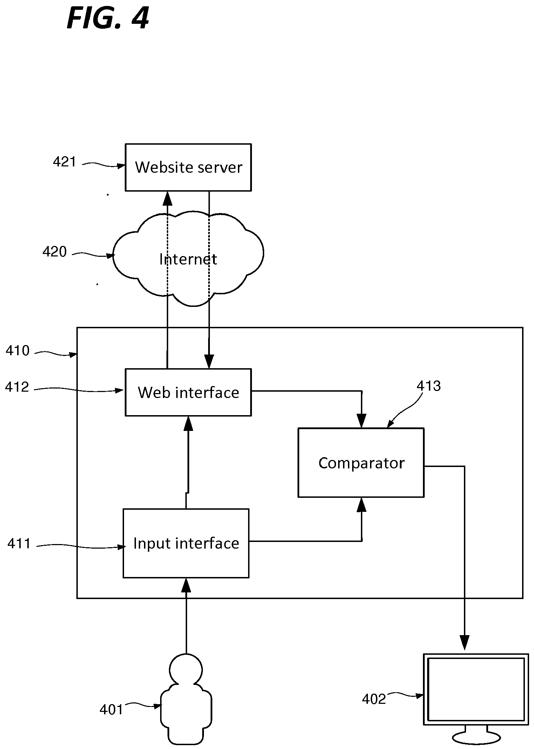

Figure 4 shows an apparatus adapted to implement embodiments of the invention.
As shown, there is provided an authenticator 410 comprising an input interface 411, the input interface being adapted to receive a first identifier of a website, for example from a user 401. Input may be provided by the way of a key board, a camera, or any input tool.
There is further provided a web interface 412, adapted to retrieve a certificate from a website server 421, for example via the internet 420 or otherwise on the basis of the first identifier, wherein the certificate incorporates a signed field comprising a first authentication value.
The authenticator is adapted to associate a second identifier of the website with a second authentication value, and further comprises a comparator 413 adapted to compare the first authentication value with the second authentication value, and in a case where the first authentication value satisfies a predetermined test relationship with the second authentication value, outputting an indication that the website is deemed authentic. As shown, the output is provided to a display 402, so that a visual indication may be provided to the user, confirming the authenticity of the web page, or alternatively warning the user that the website is not authentic and optionally suggesting not to access to the said site. Equivalently, an indication may be provided by audio, haptic and/or any other convenient means.
Software embodiments include but are not limited to applications, firmware, resident software, microcode, etc. The invention can take the form of a computer program product accessible from a computer-usable or computer-readable medium providing program code for use by or in connection with a computer or an instruction execution system.
A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.
In some embodiments, the methods and processes described herein may be implemented in whole or part by a user device. These methods and processes may be implemented by computer-application programs or services, an application-programming interface (API), a library, and/or other computer-program product, or any combination of such entities.
The user device may be a mobile device such as a smart phone or tablet, a drone, a computer or any other device with processing capability, such as a robot or other connected device, including loT (Internet of Things) devices.

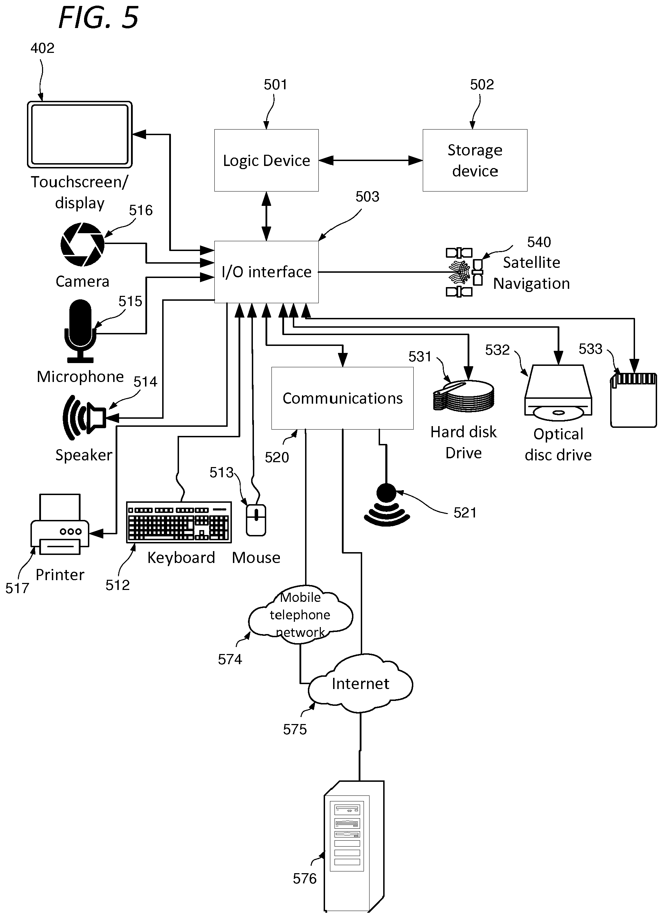

Figure 5 shows a generic computing system suitable for implementation of embodiments of the invention.
A shown in figure 5, a system includes a logic device 501 and a storage device 502. The system may optionally include a display subsystem 402, input/output subsystem 503, communication subsystem 520, and/or other components not shown.
Logic device 501 includes one or more physical devices configured to execute instructions. For example, the logic device 501 may be configured to execute instructions that are part of one or more applications, services, programs, routines, libraries, objects, components, data structures, or other logical constructs.
The logic device 501 may include one or more processors configured to execute software instructions. Additionally or alternatively, the logic device may include one or more hardware or firmware logic devices configured to execute hardware or firmware instructions. Individual components of the logic device 501 optionally may be distributed among two or more separate devices, which may be remotely located and/or configured for coordinated processing. Aspects of the logic device 501 may be virtualized and executed by remotely accessible, networked computing devices configured in a cloud-computing configuration.
Storage device 502 includes one or more physical devices configured to hold instructions executable by the logic device to implement the methods and processes described herein. When such methods and processes are implemented, the state of storage device 502 may be transformed-e.g., to hold different data.

In certain arrangements, the system may comprise an interface 503 adapted to support communications between the logic device 501 and further system components. For example, additional system components may comprise removable and/or built-in extended storage devices. Extended storage devices may comprise one or more types of storage device including optical memory 532 (e.g., CD, DVD, HD-DVD, Blu-Ray Disc, etc.), semiconductor memory 533 (e.g., RAM, EPROM, EEPROM, FLASH etc.), and/or magnetic memory 531 (e.g., hard-disk drive, floppy-disk drive, tape drive, MRAM, etc.), among others.
Aspects of logic device 501 and storage device 502 may be integrated together into one or more hardware-logic components.
The term "program" may be used to describe an aspect of computing system implemented to perform a particular function. In some cases, a program may be instantiated via logic device executing machine-readable instructions held by storage device 502.
In particular, the system of figure 5 may be used to implement embodiments of the invention.
For example a program implementing the steps described with respect to figure 2, or the algorithms presented above may be stored in storage device 502 and executed by logic device 501. The web browser and its various functions, or the functions of any or all of the units 411, 412 or 413 may similarly be implemented by a program performing the required functions, in communication with additional dedicated hardware units as necessary, and the first website identifier, certificate 12, first authentication value 13, second website identifier and second authentication value 17 may be stored in storage device 502. The display 402 may display the graphical representation of the graph, and/or the path, and may receive the user input defining the path through a touchscreen interface, or through the mouse, camera or other interface device as described herein. Accordingly the invention may be embodied in the form of a computer program.
It will be appreciated that a "service", as used herein, is an application program executable across multiple user sessions. A service may be available to one or more system components, programs, and/or other services. In some implementations, a service may run on one or more server-computing devices.
When included, display subsystem 402 may be used to present a visual representation of data held by a storage device. This visual representation may take the form of a graphical user interface (GUI). As the herein described methods and processes change the data held by the storage device 502, and thus transform the state of the storage device 502, the state of display subsystem 402 may likewise be transformed to visually represent changes in the underlying data. Display subsystem 402 may include one or more display devices utilizing virtually any type of technology for example as discussed above. Such display devices may be combined with logic device and/or storage device in a shared enclosure, or such display devices may be peripheral display devices. An audio output such as speaker 514 may also be provided.
When included, input subsystem may comprise or interface with one or more user-input devices such as a keyboard 512, mouse 513, touch screen 402, or game controller (not shown). Example NUI componentry may include a microphone 515 for speech and/or voice recognition; an infrared, colour, stereoscopic, and/or depth camera 516 for machine vision and/or gesture recognition; a head tracker, eye tracker, accelerometer, and/or gyroscope for motion detection and/or intent recognition; as well as electric-field sensing componentry for assessing brain activity. The input/output interface 503 may similarly interface with any other transducer device as may occur to the skilled person. For example, the system may interface with a printer 517. The input/output interface 503 may similarly interface with a Global Navigation Satellite System (GNSS) 540, which in certain embodiments as described above may, where provided, constitute the source of the second site identification value.
In many embodiments, where the system of figure 5 implements the functions of system 410 as described above, communication subsystem 520 may be configured to communicatively couple computing system with one or more other computing devices, for example via the internet. For example, the communication subsystem may communicatively couple computing device to a remote service hosted for example on a remote server 576 via a network of any size including for example a personal area network, local area network, wide area network, or internet 420. The remote server may constitute server 421 as described above. The communication subsystem 520 may include wired and/or wireless communication devices compatible with one or more different communication protocols. As non-limiting examples, the communication subsystem may be configured for communication via a wireless telephone network 574, or a wired or wireless local- or wide-area network. In some embodiments, the communication subsystem may allow computing system to send and/or receive messages to and/or from other devices via a network such as Internet 575. The communications subsystem may additionally support short range inductive communications with passive or active devices (NFC, RFID, UHF, etc). The system of figure 5 is intended to reflect a broad range of different types of information handling system. It will be appreciated that many of the subsystems and features described with respect to figure 5 are not required for implementation of the invention, but are included to reflect possible systems in accordance with the present invention. It will be appreciated that system architectures vary widely, and the relationship between the different sub-systems of figure 5 is merely schematic, and is likely to vary in terms of layout and the distribution of roles in systems. It will be appreciated that, in practice, systems are likely to incorporate different subsets of the various features and subsystems described with respect to figure 5.

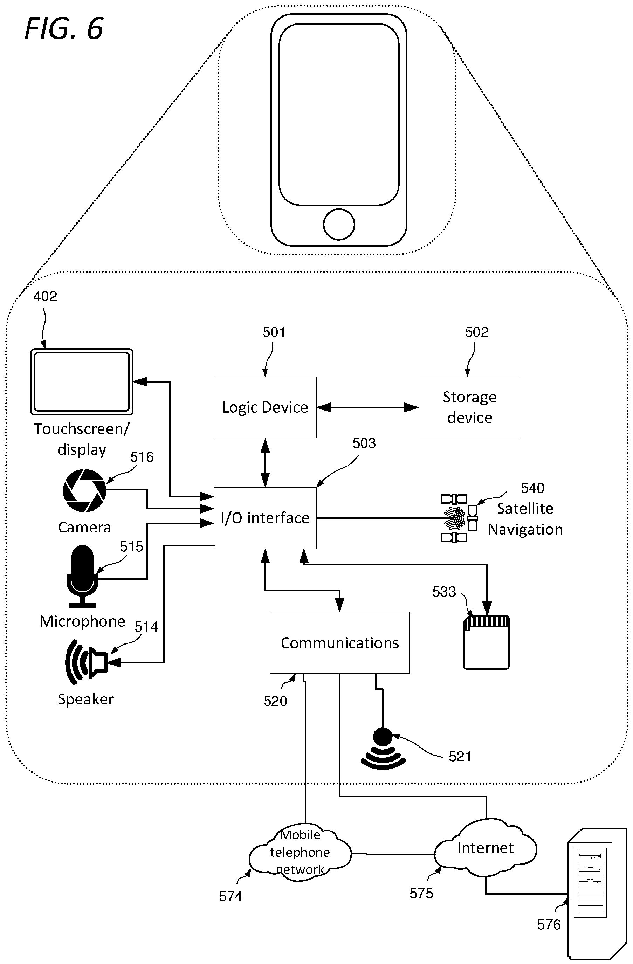

Figure 6 shows a smartphone device adaptable to constitute an embodiment. As shown in figure 6, the smartphone device incorporates elements 501, 502, 503, 520, optional near field communications interface 521, flash memory 533 and elements 514, 515, 516, 540 and 402 as described above. It is in communication with the telephone network 574 and a server 576 via the network 575. Alternative communication mechanisms such as a dedicated network or Wi-Fi may also be used. The features disclosed in this figure may also be included within a tablet device as well.
It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.
The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. An authenticator adapted to authenticate a website, said authenticator comprising an input interface adapted to receive a first identifier of a website, a web interface adapted to retrieve a certificate from a website server on the basis of the first identifier, wherein the certificate incorporates a signed field comprising a first authentication value, wherein said authenticator is further adapted to associate a second identifier of the website with a second authentication value, and further comprises a comparator adapted to compare the first authentication value with the second authentication value, and in a case where said first authentication value satisfies a predetermined test relationship with the second authentication value, outputting an indication that the website is deemed authentic.

2. The authenticator of claim 1 further comprising a Global Navigation Satellite System interface wherein the output of said Global Navigation Satellite System is provided as the basis of said second authentication value.

3. A method of determining the authenticity of a website, said method comprising the steps of:
receiving a first identifier of said website,
receiving a certificate from said website, wherein said certificate incorporates a signed field comprising a first authentication value,
associating a second identifier of said website with a second authentication value,
comparing said first authentication value with said second authentication value, and in a case where said first authentication value satisfies a predetermined test relationship with said second authentication value, considering said website to be authentic.

4. The method of claim 3 in which said first identifier is the website domain name, said method comprising the additional step stripping a URL belonging to said site to obtain the first identifier.

5. The method of any of claims 3 to 4 wherein said website is associated with a first physical location, said first authentication value and said second authentication value are geographic positions, and said first authentication value is the geographical position of said physical location, and wherein said predetermined test relationship comprises a determination whether said second authentication value lies within a predetermined distance of said first authentication value.

6. The method of claim 5 in which first and second authentication values are defined in terms of a geographic coordinate system.

7. The method of any of claims 3 to 6 in which said first site identifier is a website IP address, said method comprising an additional step of resolving a URL to obtain the first site identifier, and wherein said certificate further comprises a field containing said website IP address.

8. The method of claim 7 wherein said site is associated with said second authentication value by submitting said second site identifier and said first authentication value to an authentication module, said authentication module being adapted to compare said first site identifier to said second site identifier, and in a case where said first site identifier is identical to said second site identifier, proceeding to retrieve said second authentication value associated with said first site identifier.

9. The method of claim 8 wherein said step of retrieving said second authentication value comprises submitting said IP address to an authentication server comprising a directory of site identifiers to authentication value mappings, and receiving from said authentication server the second authentication value corresponding to said second site identifier.

10. The method of any of claims 3 to 9 comprising the further step of, after receiving the certificate, retrieving the public key of the certifying authority of said certificate, and authenticating said certificate and said signed field with said public key.

11. The method of any of claims 3 to 10 in which the second authentication value is provided via a user input.

12. A computer program comprising instructions adapted to implement the steps of any of claims 3 to 11.

13. A website certificate for determining the authenticity of a website, said certificate comprising a first identifier of said website, and a signed field comprising a first authentication value, wherein said first authentication value constitutes a publically verifiable characteristic of said website.
